# FASCICULE DE BREVET EUROPEEN

(11) **EP 2 530 059 B1**
(45) Date de publication et mention de la délivrance du brevet: **31.12.2014**
(21) Numéro de dépôt: 12170326.8
(22) Date de dépôt: 31.05.2012
(51) Int. Cl.: C04B 20/06, H05B 6/64, F27B 7/34, F27B 7/12, H05B 6/80

(54) **Dispositif de traitement thermique, en particulier de matériaux divisés, au moins par rayonnement micro-ondes**
Vorrichtung zur Wärmebehandlung, insbesondere von getrennten Materialien, zumindest durch Mikrowellenstrahlung
Device for heat treatment, in particular of divided materials, at least by microwave radiation

(30) Priorité: 31.05.2011 FR 1154785
(43) Date de publication de la demande: 05.12.2012
(73) Titulaire: IDCO, 13009 Marseille (FR)
(72) Inventeur: Vandenbussche, Frédéric, 13009 MARSEILLE (FR)
(74) Mandataire: Debay, Yves

(56) Documents cités:
- WO-A1-2004/068906
- WO-A1-2004/068907
- DE-A1- 3 907 248
- FR-A1- 2 647 292

## Description

La présente invention concerne l'amélioration d'un dispositif industriel de traitement thermique à haut rendement, en particulier pour des matériaux divisés, tels que grains, granulats, poudres, pâtes, liquides, ..., par rayonnement micro-ondes.

On connaît, notamment dans les industries de la transformation, divers dispositifs et des procédés de traitement thermique appliqués aux matériaux susmentionnés.

La technologie de chauffe par micro-ondes est particulièrement adaptée pour ce type de matériau car elle permet une chauffe directe au coeur du matériau pour de faibles épaisseurs jusqu'à l'ordre de grandeur du centimètre. De nombreuses applications industrielles utilisent cette technique de chauffe très efficace, surtout dans le domaine du séchage et de la désinfection.

Cependant le problème de la chauffe par micro-ondes réside dans l'homogénéité de cuisson pour laquelle un brassage entre les particules du matériau est indispensable. La chauffe par micro-ondes étant très sélective, un mouvement relatif des particules entre elles est indispensable pour une bonne homogénéité. En effet, la chauffe par micro-ondes dépend de la permittivité du matériau qui varie en fonction de la température. Les grains n'étant pas strictement identiques les uns aux autres (chimie, granulométrie, homogénéité, siccité), il suffit qu'un grain commence à chauffer avant les autres pour qu'il chauffe plus rapidement que les autres et que le rayonnement micro-ondes « se concentre » sur lui : c'est le phénomène d'emballement thermique très courant en micro-ondes. Ce phénomène peut être légèrement atténué par un mouvement de l'ensemble dans le champ micro-ondes (solution des plateaux tournants ou des brasseurs d'ondes). Mais cette solution est très peu efficace car les particules ne sont pas en mouvement relatif les unes par rapport aux autres.

Pour des matériaux divisés, la solution la plus efficace est un brassage de la matière qui permet un échange thermique entre particules par convection, conduction et, à plus haute température par rayonnement. Cet échange permanent permet un équilibrage précis de la température des particules à chaque instant.

A titre d'exemple, les documents WO-2004/068.906 et WO-2004/068.907 décrivent, respectivement, une ligne complète de traitement de matériaux divisés, depuis la granulation de la pâte, jusqu'au refroidissement des granules, et quelques particularités techniques du four de cuisson, particulièrement dans l'application à l'expansion d'argile. Ces documents décrivent une cavité intérieure tournante permettant un brassage efficace des granulés. Cette cavité est constituée d'une virole en béton reposant sur un fond en béton fixé sur un plateau métallique. En effet, l'état de l'art préconise l'utilisation de ce type de matériau, la présence de métal dans le champ micro-ondes étant jusqu'alors fortement déconseillée et aucune mesure ni essai n'ont été établis jusqu'à présent pour étudier le comportement du métal sous micro-ondes à haute température, en particulier au-delà de 500 °C.

Cette virole en béton se désolidarise du fond pour évacuer le produit traité. Cette technologie ne permet pas une étanchéité pour les produits fins et entraine des problèmes de remise en place après plusieurs cycles. Ces documents décrivent une autre solution de vidange à l'aide d'une spirale fixée sur la face interne de la virole, qui permet éventuellement au matériau de remonter lorsque l'on inverse le sens de rotation de la virole. Toutefois ce dispositif s'avère inadapté à la vidange de produits techniques de faible granulométrie (moins de 1 mm) ou sphériques.

Un autre inconvénient majeur de ces dispositifs est le problème d'inertie thermique de la cavité en béton et de l'isolation thermique (emploi de briques réfractaires silico-alumineuses). Ces dispositifs montrent alors des limites de rendement, car une grande partie de l'énergie sert à réchauffer indirectement la cavité. De plus, l'énergie employée à la chauffe indirecte de la cavité nécessite un temps important de montée en température du fait de la limitation en puissance des générateurs de micro-ondes sur le marché, ce qui contribue fortement à la baisse de rendement du four. De plus ces matériaux représentent un danger d'emballement thermique à haute température, pouvant entrainer la fusion du béton.

La présente invention a pour but de pallier au moins certains inconvénients de l'art antérieur en proposant notamment un dispositif de traitement thermique, au moins par rayonnement micro-ondes, permettant d'améliorer le rendement global du traitement et de proposer une solution technique permettant une application industrielle pour le traitement thermique haute température, en particulier de matériaux divisés, dans des applications telles que l'expansion, le séchage, l'inertage, la transformation, la vitrification...

Ce but est atteint par un dispositif de traitement thermique, en particulier de matériaux divisés, au moins par rayonnement micro-ondes comprenant une cuve tournante formant une cavité constituée d'un métal réfractaire et de faible résistivité, entrainée en rotation par des moyens permettant de faire varier sa vitesse de façon à optimiser le brassage du produit à traiter, la cuve étant placée dans une enceinte étanche au rayonnement micro-ondes, au moins à la fréquence de traitement, communiquant au moins avec un générateur de micro-ondes et étant munie de moyen de pivotement permettant de modifier l'inclinaison de cette dernière par rapport à la verticale, l'enceinte comprenant également des moyens d'introduction du matériau à traiter et des moyens de vidange du matériau traité.

Selon une autre particularité, l'impédance de la cuve (7) est ajustable par des moyens de réglage (8f) en hauteur de la cuve (7).

Selon une autre particularité, l'enceinte du dispositif comprend au moins une sortie apte à évacuer le matériau traité, par gravitation, suite au pivotement de cette dernière.

Selon une autre particularité, un joint, formé d'une tresse métallique, est disposé entre l'enceinte et son couvercle de façon à éviter les fuites de rayonnement micro-ondes.

Selon une autre particularité, un joint, formé d'une tresse métallique est placé entre l'enceinte et l'arbre tournant entrainant la cuve de façon à éviter les fuites de rayonnement micro-ondes.

Selon une autre particularité, le couvercle comporte un système de goulotte métallique, sur sa face en regard de la cuve tournante, permettant la vidange du matériau traité.

Selon une autre particularité, l'enceinte, son couvercle et la cuve tournante sont isolés thermiquement à l'aide de matériaux isolants à faible inertie thermique et transparents aux rayonnements micro-ondes, par exemple en fibres alumino-silicates.

Selon une autre particularité, le matériau isolant du couvercle est fixé sur ce dernier par l'intermédiaire d'un système de fixation compatible avec le rayonnement micro-ondes.

Selon une autre particularité, le ou les ensemble(s) générateur(s) de micro-ondes et guide(s) d'onde sont montés solidaires de l'enceinte de façon à pouvoir pivoter avec cette dernière.

Selon une autre particularité, un système de bridage automatique permet le déverrouillage et le verrouillage du/des guide(s) d'ondes de façon à désolidariser et réassembler ces derniers à l'enceinte lors du pivotement de cette dernière.

Selon une autre particularité, au moins une fenêtre en quartz est disposée au niveau de chaque bride de guides d'ondes pour éviter les remontées de poussières vers le(s) générateur(s).

Selon une autre particularité, au moins un système d'injection d'air est disposé sur au moins un guide d'ondes pour créer une surpression à l'intérieur de ce dernier et éviter la propagation de poussières.

Selon une autre particularité, le dispositif de traitement thermique comporte des moyens conventionnels de chauffe non micro-ondes de façon à préchauffer le matériau à traiter.

Selon une autre particularité, le dispositif de traitement thermique comporte, à l'extérieur de l'enceinte, des moyens de récupération de la chaleur émise par le matériau traité, cette chaleur étant transmise à un réchauffeur, après la sortie de l'enceinte du matériau traité, pour chauffer, au moins en partie, ce réchauffeur et préchauffer le matériau à traiter avant son introduction dans l'enceinte.

Selon une autre particularité, le dispositif de traitement thermique comporte des moyens de mesure de la température du matériau à traiter de façon à suivre et/ou réguler le traitement thermique.

La technologie résultant de la mise en oeuvre de l'invention est particulièrement adaptée pour des traitements thermiques nécessitant l'application de températures comprises, par exemple et de façon non limitative, entre 200°C et 1800°C.

Elle est également particulièrement adaptée au traitement des matériaux divisés, se présentant sous forme de grains ou de poudre dont la granulométrie est comprise entre le micromètre et quelques centimètres, ou sous forme de pâte ou encore de liquide, d'origine minérale ou organique, tels que l'argile, la silice, l'amiante, le verre, les Refioms, les mâchefers, les boues, les broyats, ...

Selon l'invention, le but susmentionné est atteint grâce à un dispositif de traitement thermique, en particulier de matériaux divisés, par rayonnement micro-ondes, permettant l'injection en continu ou discontinu de produit à traiter dans une cavité tournante. Le matériau à traiter est alors brassé de façon homogène et porté à une température de consigne précise. Le produit est monté à la température désirée par les effets combinés des micro-ondes, de la conduction, de la convection, du rayonnement et issus de l'interaction des granulés entre eux produite par le brassage. D'autres sources de chaleur peuvent être rajoutées pour accroitre l'efficacité du dispositif, telles que l'air chaud ou le rayonnement infrarouge. La conception innovante de la cavité, de son isolation thermique, de sa cinématique de vidange par basculement permet un rendement très supérieur à l'art antérieur et une maintenance aisée.

Les buts, caractéristiques et avantages ci-dessus, et d'autres encore, ressortiront mieux de la description détaillée qui suit et des dessins annexés de différentes solutions technologiques dans lesquels :
La figure 1 est une vue schématique représentant un exemple de réalisation d'une unité de traitement thermique par rayonnement micro-ondes.
La figure 2 est une vue schématique, en coupe longitudinale, d'un exemple de réalisation d'un dispositif de traitement thermique selon l'invention qui décrit des innovations apportées à l'enceinte pour atteindre une efficacité de chauffe optimale.
Les figures 3a à 3c sont des vues schématiques, en coupe partielle longitudinale, représentant trois positions différentes d'un exemple de réalisation du dispositif de traitement thermique selon l'invention.
Les figures 4 et 5 sont des vues schématiques représentant un exemple de réalisation du dispositif de traitement thermique selon l'invention selon lequel le ou les générateur(s) de micro-ondes et l'enceinte sont rendus solidaires dans l'opération de rotation.
La figure 6 est une vue schématique et en perspective représentant un exemple de réalisation du couvercle de l'enceinte selon l'invention.
La figure 7 est une vue schématique représentant un exemple particulier de réalisation du dispositif de traitement thermique selon l'invention.

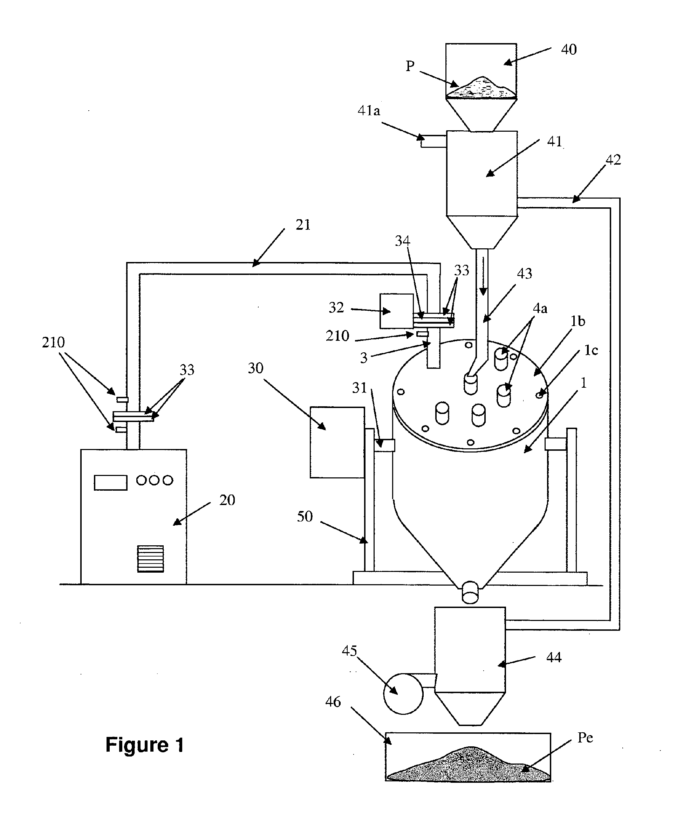

En référence à la figure 1, un exemple de réalisation d'une unité de traitement thermique, au moins par rayonnement micro-ondes, va être présentée.

Dans un mode de réalisations, au moins un générateur de micro-ondes (20) de fréquence pouvant être comprise, par exemple et de façon non limitative, entre 300 MHz et 6 000 MHz, et de préférence, autour des fréquences standards de 2 450 MHz ou 915 MHz, est relié par l'intermédiaire d'au moins un guide d'ondes (21) et de brides (33) à une enceinte (1). Le ou les générateurs micro-ondes ont pour but d'apporter l'énergie nécessaire au traitement thermique du matériau à traiter (P). D'autres sources de chaleur peuvent être rajoutées pour accroitre l'efficacité du traitement telles que, par exemple, l'air chaud ou le rayonnement infrarouge. L'enceinte (1) peut avoir des dimensions comprises, par exemple et de façon non limitative, entre 300mm et 2 500 mm. Un ou plusieurs orifice(s) d'entrée d'air (210) peuvent être placés sur les guides d'ondes (21) pour permettre, par exemple, leur dépoussiérage ou leur refroidissement. Les brides (33) reliant le guide d'ondes (21) au guide d'entrée (3) peuvent être munies d'un système de verrouillage/déverrouillage rapide (32), par exemple et de façon non restrictive, par air comprimé. Au moins une fenêtre (34), par exemple, en quartz, ou tout autre matériau équivalent transparent aux micro-ondes, peut également être placée entre les brides (33) afin d'éviter une remontée des poussières dans le guide d'ondes (21) produites, par exemple, lors des cycles de chauffe.

Dans un mode de réalisations, l'enceinte (1) est montée pivotante, par exemple, sur un socle (50) par l'intermédiaire d'un axe (31) passant, par exemple, par le centre de gravité de l'enceinte (1). Des moyens de pivotement, comme par exemple un ensemble motoréducteur (30) peut permettre de faire pivoter rapidement l'enceinte (1) autour de son axe (31).

Dans certains modes de réalisation, le matériau à traiter (P) peut être stocké dans un silo (40), puis passer dans un réchauffeur (41). Ce réchauffeur (41) peut utiliser l'air chaud issu du refroidissement par air du matériau sortant du four dont l'air chaud peut être amené par une conduite (42). Cet air traverse alors le matériau à traiter (P) dans le réchauffeur (41) avant d'être évacué, par exemple, par un orifice (41a). Le matériau à traiter (P) réchauffé est envoyé par une conduite (43) dans l'enceinte (1) de façon continue ou par lots (^{«} batchs ^{»} en anglais) suivant l'usage demandé.

Dans un mode de réalisation, le couvercle (1b) de l'enceinte (1) peut être, par exemple, fixé sur l'enceinte par un ensemble de vis (1c). Des ouvertures (4a), comme par exemple des orifices tubulaires, peuvent être aménagées sur le couvercle (1b) pour permettre, par exemple, des mesures, comme par exemple et de façon non restrictive, des mesures de température, des contrôles, l'évacuation des gaz produits, des prises d'échantillons...

Dans un autre mode de réalisation, après traitement thermique, au moins par rayonnement micro-ondes, le matériau transformé (Pe) peut être évacué par basculement dans un refroidisseur (44), par exemple, par air dont le débit d'air est assuré, par exemple, par un ventilateur (45). Un but de ce refroidisseur (44) est d'accélérer le refroidissement du matériau (Pe) après traitement thermique. Un autre but de ce refroidisseur est de récupérer la chaleur émise par le matériau traité (Pe) après sa sortie de l'enceinte (1), pendant l'étape de refroidissement. Le refroidissement du matériau traité (Pe) peut, par exemple, être effectué en faisant circuler, sur ce dernier, un flux d'air, par exemple, par l'intermédiaire d'un ventilateur ou tout autre type de moyen équivalent. L'air chaud ainsi produit, par exemple et de façon non limitative, à 200°C pour un matériau traité (Pe) à 900°C, peut être dirigé, par exemple, vers un réchauffeur (41) par une conduite (42). Le matériau traité (Pe), une fois refroidi, peut être ensuite stocké, par exemple, dans une trémie (46).

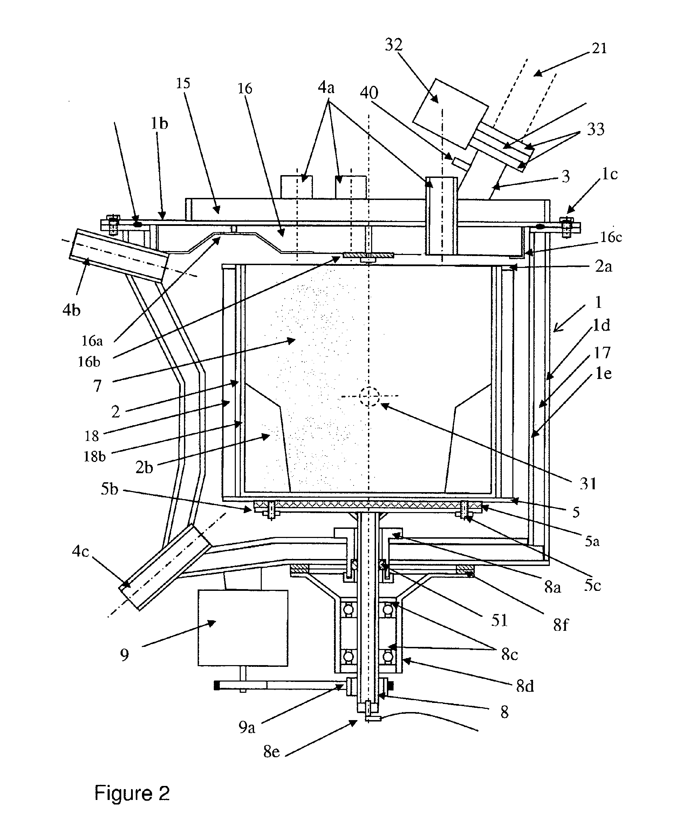

En référence à la figure 2, dans un mode de réalisation, un guide d'ondes (21), provenant d'un générateur de micro-ondes, peut être raccordé à un guide d'entrée (3), communicant avec l'enceinte (1), par des brides (33) pouvant être verrouillées et déverrouillées. Selon un mode de réalisation préférentiel les opérations de verrouillage/déverrouillage sont réalisées rapidement et de façon automatique, par exemple, par des moyens de verrouillage et de déverrouillage automatiques, par exemple et de façon non restrictive par un système de bridage (32) automatique. Ce système de bridage (32) automatique peut, par exemple, être un système à air comprimé ou électrique. Au moins une fenêtre de quartz (34), matériau transparent aux micro-ondes, peut être insérée entre ces brides (33) de façon à empêcher les poussières, par exemple, issues du brassage de matériau dans l'enceinte (1) de remonter dans le guide d'ondes (21) tout en laissant passer le rayonnement micro-ondes. Dans certains modes de réalisation, un piquage d'air (210) peut permettre de conserver une zone en surpression de façon à refroidir cette portion de guide d'ondes et/ou à empêcher les poussières de s'accumuler sur la fenêtre (34).

Dans un autre mode de réalisation, l'enceinte (1) peut posséder un couvercle (1b) fixé sur cette dernière à l'aide, par exemple, de vis (1c). Afin d'éviter les fuites de rayonnement micro-ondes au niveau du couvercle (1b), un joint hyperfréquence (50) périphérique, comme par exemple, une tresse métallique peut être inséré entre le couvercle (1b) et l'enceinte (1). Une autre variante de réalisation peut être l'utilisation d'un joint quart d'ondes, ou piège quart d'onde, dispositif connu dans le domaine de l'art.

Dans un autre mode de réalisation, Le couvercle (1b) peut comporter des ouvertures (4a) ou piquages pour, par exemple et de façon non limitative, permettre l'entrée du matériau à traiter (P), le passage de l'instrumentation, la sortie des gaz pouvant être produits par la chauffe du matériau et/ou pour permettre d'effectuer différents contrôles. Ces piquages (4a) sont, par exemple, réalisés sous la forme de tubes dont le diamètre peut, par exemple et de façon non restrictive, être compris entre 20 mm et 300 mm et la longueur, par exemple, comprise entre 50 mm et 300 mm. Ces dimensions peuvent être déterminées en fonction de la fréquence utilisée pour empêcher les fuites de rayonnement micro-ondes. Par exemple, et de façon connue, ces dimensions peuvent être déterminées de façon à ce qu'elles soient très petites devant la longueur d'onde utilisée afin d'atténuer fortement le passage des ondes électromagnétiques et donc d'éviter les fuites. Ces dimensions pourront être, par exemple, choisies inférieures à un dixième de la longueur d'onde utilisée ou encore plus petite pour un taux d'atténuation supérieur.

Dans un dernier mode de réalisation, le couvercle (1b) peut être isolé thermiquement à l'aide d'un matériau isolant (15) standard sur sa face extérieure, c'est-à-dire sur la face opposée à la face en regard de la cuve tournante (7).

Suivant un exemple nullement limitatif, le matériau isolant peut être de la laine de roche sur une épaisseur, par exemple égale à environ 50 mm. Une innovation importante est l'utilisation d'un matériau isolant thermique (16) à base de silice/magnésium ou silice/alumine sous forme, par exemple, de nappe fibrée permettant une tenue à haute température, jusqu'à 1300°C, tout en possédant une très faible inertie thermique. Cet isolant peut, par exemple, être disposé sur une épaisseur d'environ 50 mm sur la face inférieure du couvercle, c'est-à-dire la face en regard de la cuve tournante (7). Ce matériau isolant peut être maintenu, par exemple, par un système de fixations efficaces et compatibles avec le rayonnement micro-ondes à forte densité de puissance afin de ne pas être à l'origine d'arcs électriques. Ces fixations peuvent comprendre une série d'équerres périphériques (16c) métalliques, par exemple et de façon non limitative, en acier et de préférence en acier inoxydable. Ces fixations périphériques (16c) peuvent, par exemple, être soudées, sur la face intérieure du couvercle (1b) et de préférence soudées, par exemple, à une distance minimale d'environ 10 mm de la paroi interne de l'enceinte (1), c'est-à-dire de la paroi en regard de la cuve tournante (7) afin d'éviter la formation d'arcs électrique. De façon préférentielle, ces fixations seront soudées sur toute leur longueur, par un cordon continu, afin d'éviter toute formation d'arc électrique. Ces fixations peuvent également comprendre une fixation centrale (16b) réalisée, par exemple, à l'aide d'une tige fixée au centre de la face interne du couvercle (1b) et sur laquelle est placée une rondelle venant comprimer l'isolant thermique (16) contre la face interne du couvercle (1b), elle-même bloquée, par exemple, par un système d'écrou et contre écrou. De façon avantageuse, ce dispositif peut permettre une continuité électrique entre les éléments métalliques et un design permettant d'éviter l'amorçage d'arcs électriques. Afin de minimiser les pertes calorifiques dues à la convection et au rayonnement du matériau à traiter (P) présent dans la cuve tournante (7), l'écart entre l'isolant (16) du couvercle (1b) et le bord supérieur (2a) de cette cuve (7) doit être minimisé. Cependant, afin de laisser un passage suffisant pour l'évacuation du matériau traité (Pe) lors de l'opération de vidange, par exemple, par basculement ou pivotement de la cuve tournante (7), une goulotte métallique (16a) peut être placée sur l'isolant (16) et fixée sur la face interne du couvercle (1b). Cette goulotte (16a) peut couvrir angulairement la surface minimale nécessaire pour l'évacuation du produit traité (Pe) correspondant à un angle compris, par exemple, entre 20°C et 90°C.

Une autre innovation importante est la conception de la cavité tournante (7) tant pour le matériau utilisé que pour son design. En effet, comme décrit plus haut et d'après l'état de l'art, l'utilisation de métal et de façon préférentielle, d'acier inoxydable, matériau réfléchissant les micro-ondes, est à priori incompatible pour une utilisation dans un champ micro-ondes, du fait de la possibilité de création d'arcs électriques et de boucles d'induction induites par la composante électrique du champ (courant de Foucault) pouvant amener une chauffe non recherchée et un emballement du métal. Ce risque est d'autant plus élevé que la température d'utilisation et que la densité du champ sont importantes. Les études et essais menés par nos soins ont permis de déterminer le comportement à haute température et à de fortes densités de champ des aciers inoxydables et ont démontré que l'utilisation d'une nuance réfractaire à faible résistivité, par exemple NS30, de cet acier permettait son utilisation pour des applications jusqu'à plus de 1200°C, voire 2000 °C. Le matériau étant en mouvement dans la cuve (7), les contacts entre le matériau et le métal sont donc ponctuels et très brefs et la température du métal est inférieure à celle du matériau à coeur, les micro-ondes chauffant directement et uniquement le produit granulaire à traiter (P).

L'utilisation d'un métal tel que l'acier en présence de micro-ondes et à hautes températures a nécessité une longue mise au point de la part de spécialistes, donc non évidentes pour un homme de l'art. Les caractéristiques spécifiques se situent au niveau de la conception, des dimensions, de la géométrie, des épaisseurs et de la nuance de l'acier.

Les effets techniques sont multiples :
- une forte diminution de l'inertie thermique allant de 35% à 60% entrainant une forte diminution du temps de cycle allant de 2 à 3 fois plus rapide que les dispositif de l'art antérieur et une forte augmentation du rendement,
- les micro-ondes ne chauffent pas la cavité mais le produit à chauffer, ce qui améliore le rendement du chauffage avec des gains de 30% à 70% suivant les températures,
- la possibilité d'obtenir une cavité froide en adaptant un système de refroidissement autour de la cavité tournante, tel qu'une circulation de fluide thermique, et en utilisant une conduction du métal adaptée,
- la possibilité de traiter des produits alimentaires.

Le métal utilisé peut être un acier inoxydable de type 304L ou un acier réfractaire au Chrome/Nickel, amagnétique et à faible résistivité de type NS30 suivant les applications et les températures de traitement. L'épaisseur de la cuve métallique peut être comprise de 2 mm à 10 mm avec un diamètre de la cuve de 100 mm à 2500 mm et des hauteurs allant de 100 mm à 30000 mm suivant les applications, les puissances et les types de produits. La cuve peut être cylindrique. Elle peut comprendre ou non des pales de brassage. Le rapport du diamètre de la cuve sur sa hauteur dépend de la granulométrie, de la siccité, de l'aspect, de la plasticité, etc. du produit à chauffer.

Dans un exemple de réalisation, la cuve en acier a une épaisseur de 5 mm, un diamètre de 1400 mm et une hauteur de 1300 mm.

Dans un mode de réalisation, l'inertie thermique générale de la cuve tournante (7) peut être minimisée, par exemple, par l'association d'une faible épaisseur de paroi métallique, par exemple, en acier inoxydable réfractaire sur sa face interne (2) et d'un isolant thermique (18) à base, par exemple, de silice/magnésium ou silice/alumine sous forme de nappe fibrée permettant une tenue à haute température, jusqu'à environ 1300°C, tout en possédant une très faible inertie thermique. Cet isolant thermique (18) peut, par exemple, être disposé sur une épaisseur d'environ 50 mm sur la face externe de la virole (2) de la cuve tournante (7), c'est-à-dire la face en regard de l'enceinte. Dans certains modes de réalisation, ce matériau isolant (18) peut être maintenu en place entre les bords supérieurs (2a) et le fond (5) de la cuve (7), par exemple, par des cerclages, par exemple, soudés ou une paroi métallique de fine épaisseur. Ce dispositif d'isolation peut, suivant les besoins, être complété efficacement, par exemple, par l'ajout d'un revêtement (18b) en matériau à base de quartz, ou tout autre matériau équivalent réfléchissant le rayonnement infrarouge et transparent au rayonnement micro-ondes. Ce revêtement (18b) peut, par exemple, être disposé sur toute la face interne de la cuve tournante (7) sur une épaisseur, par exemple et de façon nullement restrictive, d'environ 10 mm. De façon avantageuse, ce revêtement (18b) permet de minimiser la chauffe induite de la cuve métallique (7) par le rayonnement infrarouge issu du produit à traiter(P) chauffé par les micro-ondes en reflétant ce rayonnement infrarouge vers le produit.

Dans un autre mode de réalisation, le fond (5) de la cuve tournante (7) peut, comme la virole (2), être réalisé en métal et de préférence en acier inoxydable réfractaire. Ce fond (5) peut être fixé à un plateau métallique d'entrainement (5b) à l'aide, par exemple, de vis (5c). Dans certains modes de réalisation, ces vis peuvent, par exemple, être soudées sur la face inférieure du fond (5), et être associées, par exemple, à des rondelles et des écrous (5c) de telle sorte qu'il y ait une parfaite continuité électrique entre le fond (5) et la virole (2), ceci afin de prévenir la création d'arcs électriques dans une zone de présence possible de rayonnement micro-ondes. Un isolant thermique (5a), rigide ou non, peut être disposé entre le fond de la cuve (5) et le plateau support (5b) de façon à éviter de créer un pont thermique à ce niveau, et ainsi améliorer l'isolation de la cuve (7) pour augmenter son rendement. Cet isolant doit être compatible avec son usage en champ électromagnétique et pourra être, de façon avantageuse, constitué de feuilles stratifiées à base de papier mica muscovite.

Dans un mode de réalisation, la cuve tournante (7) peut être entrainée en rotation par un moteur (9) par l'intermédiaire d'un arbre d'entrainement (8). L'arbre d'entrainement (8) de la cuve tournante (7) peut être avantageusement cylindrique de façon à permettre une circulation d'air par un joint tournant (8e). Cette circulation peut servir conjointement au dépoussiérage et au refroidissement du système de joint tournant (8e) et de la zone de guidage (8d) pouvant inclure, par exemple, des roulements (8c) ou un palier lisse. De façon avantageuse et innovante, le système de joint tournant (8e) peut être conçu d'une pièce support (8a) dans laquelle peut venir se loger un joint hyperfréquence (51), comme par exemple, une tresse métallique permettant d'assurer une bonne étanchéité aux rayonnements micro-ondes entre l'enceinte et l'arbre lors de la rotation de la cuve (7). Une autre solution connue du domaine de l'art est l'utilisation d'un joint quart d'ondes, ou piège quart d'onde.

Dans un autre mode de réalisation, des moyens de réglage (8f), par exemple et de façon non limitative comprennent un système de cales pouvant se glisser facilement entre le corps de vidange (8d) et le fond de la cuve fixe (1d), permettant un réglage en hauteur de la cavité interne tournante (7). Le déplacement de la cuve (7) entraine une modification des dimensions de la cavité formée par la cuve (7) et l'enceinte (1), ce qui modifie les conditions de propagations du champ micro-ondes. Ce dispositif permet in fine un réglage d'impédance précis de la cavité afin d'optimiser le rendement de celle-ci aux micro-ondes. Ce système de cales peut, par exemple et de façon non limitative, être automatisé et remplacé par exemple par un système mécanique à filetage connu ou tout autre dispositif permettant un déplacement relatif entre l'émetteur et la cuve (7).

Dans un autre mode de réalisation, l'entrainement en rotation de la cuve (7) peut être assuré par un moteur (9), par exemple, solidaire de l'enceinte (1) et entrainant l'arbre (8) par exemple à l'aide d'un système de courroie et de roue dentée (9a). Selon l'invention, dans certains modes de réalisation, ce moteur peut être équipé d'un variateur de vitesse permettant de contrôler précisément la vitesse de rotation de la cuve, par exemple et de façon nullement restrictive, entre 5 et 100 tr/min. Comme décrit précédemment, dans différents modes de réalisation, l'enceinte (1) possède des moyens de pivotement permettant de régler l'inclinaison de cette dernière et par conséquent, celle de la cuve tournante (7). Le réglage de la vitesse de rotation de la cuve tournante (7), associé au réglage de son angle d'inclinaison, permet une optimisation du brassage en fonction du matériau à traiter (P) (granulométrie, géométrie, fluidité, collage...). A chaque matériau à traiter (P) correspondra un couple précis (vitesse, inclinaison) permettant d'optimiser son traitement thermique. De façon avantageuse, ce brassage maîtrisé, du produit à traiter (P), permet d'assurer sa parfaite homogénéité de chauffe, au degré prés.

Dans un mode de réalisation, des pales de brassage (2b) métallique, par exemple, en acier de même nature que la virole (2) peuvent être ajoutées suivant le produit (P) à traiter. Leur fixation, par exemple soudée en continu, sera telle qu'il y ait une parfaite continuité électrique avec la virole (2) sur toute la longueur de la soudure de façon à éviter la formation d'arc électrique.

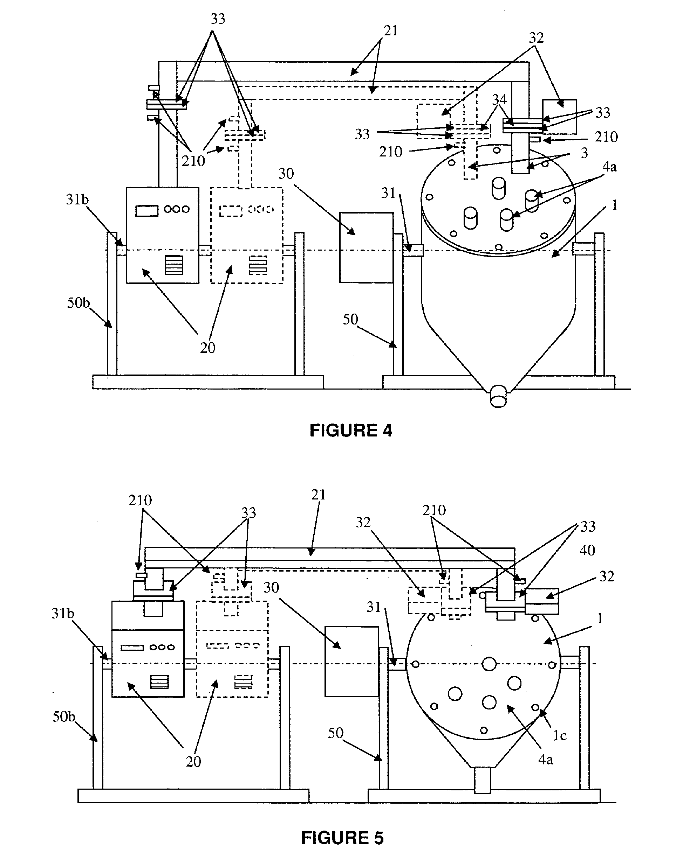

Dans un mode de réalisation, l'inclinaison de l'enceinte (1) autour d'un axe (31) passant par son centre de gravité, s'effectue de préférence de façon motorisée conjointement au bridage automatique (32) du ou des guide(s) d'ondes (21). Cette solution technique permet une diminution notable de la durée du temps de cycle. Une seconde solution, selon l'innovation, peut consister à effectuer le pivotement ou le basculement de l'enceinte (1) de façon solidaire à celui des générateurs. Cette solution est décrite plus en détail ci-après et sur la figure 4.

Dans un mode de réalisation, afin d'optimiser l'isolation thermique de l'enceinte (1), la paroi de cette dernière peut être constituée d'une double peau métallique (1 d, 1e) entourant un matériau isolant (17). Dans un mode de réalisation préférentielle, la face interne (1e) de l'enceinte (1), c'est-à-dire la face en regard de la cuve (7), est en acier inoxydable. L'isolant thermique (17) entre ces deux peaux métalliques (1 d, 1e) n'étant pas soumis au champ micro-ondes peut être un isolant standard, non nécessairement compatible avec le rayonnement micro-ondes, par exemple et de façon non limitative, de la laine de roche sur une épaisseur, par exemple, d'environ 50 mm.

Dans un mode de réalisation de l'invention, l'enceinte (1) peut posséder au moins deux sorties (4b, 4c). De façon préférentielle, ces sorties peuvent être conçues avec une forme de la l'enceinte (1), en entonnoir, de façon à permettre l'évacuation de la totalité du produit traité (Pe) sans zone de rétention. Ces formes en entonnoir peuvent être reliées à des formes tubulaires métalliques, par exemple, en acier inoxydable dont le diamètre, par exemple compris entre 20 mm et 300 mm et la longueur, par exemple, comprise entre 50 mm et 300 mm, peuvent être déterminés en fonction de la fréquence utilisée pour empêcher les fuites micro-ondes. De façon préférentielle, la sortie (4b) peut être placée sur la partie supérieure de l'enceinte (1), c'est-à-dire la partie la plus proche du couvercle (1b), lorsque cette dernière est disposée en position verticale comme illustré sur la figure 2. La sortie (4b) permet alors l'évacuation du matériau traité (Pe) lors de l'inclinaison de l'enceinte à un angle par exemple compris entre 40° et 180° par rapport à la verticale (V). Une sortie (4c) peut être disposée, par exemple, sur la partie inférieure de l'enceinte (1) de façon à permettre l'évacuation, par exemple, les poussières, résidus, particules éjectées de la cavité ou les condensats des eaux de vaporisation.

Dans un autre mode de réalisation, cette sortie (4c) peut être utilisée pour l'évacuation du matériau traité (Pe), par exemple, lors du traitement thermique du matériau (P) en continu et vidange par débordement ou surverse. Ce mode de réalisation, par tri densimétrique, est particulièrement adapté pour des matériaux à traiter (P) dont la densité diminue après traitement thermique. Dans ce mode de réalisation, le matériau à traiter (P) est introduit en continu dans l'enceinte (1), par exemple, par au moins une entrée (4a). Après un temps de chauffe déterminé, le matériau traité (Pe) devient plus léger que le matériau à traiter ou en cours de traitement et se retrouve à la surface des matériaux (P, Pe). L'inclinaison de l'enceinte (1) permet alors au matériau traité (Pe), plus léger, de déborder de la cuve tournante (7) pour se retrouver dans la partie inférieure de l'enceinte (1) puis s'évacuer naturellement par gravité dans des moyens de vidange (4c) comme par exemple, un entonnoir de sortie.

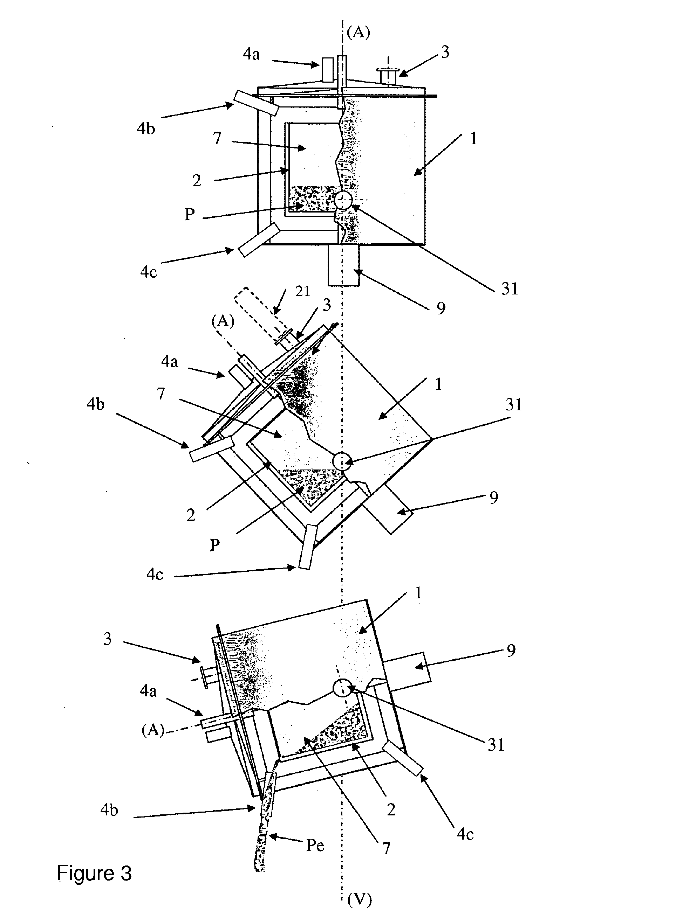

Les figures 3a à 3c sont des vues à caractère schématique, en coupe partielle longitudinale, représentant trois positions différentes d'un exemple de réalisation du dispositif de traitement thermique selon l'invention.
- La première position (figure 3a), dénommée ^{«} position de maintenance ^{»}, est telle que l'axe de rotation (A) de la cuve interne (7) est parallèle à la verticale (V). Sur la figure 3a, l'axe (A) et la verticale (V) sont confondues. Cette position peut permettre, par exemple, une ouverture et un démontage aisés de la cuve par manipulation, par exemple, à l'aide d'un pont roulant, pour les opérations de maintenance.
- La seconde position, (figure 3b) dénommée ^{«} position de travail ^{»}, est telle que l'angle l'inclinaison entre l'axe (A) de la cuve (7) et la verticale (V) est, par exemple, compris entre 30° et 60°, la valeur optimale, souvent voisine de 45°, dépendant du produit traité (P) et de la vitesse de rotation de la cuve (7). Cette position peut correspondre, par exemple, à la position de remplissage et de travail lors de laquelle le produit à traiter (P) est traité thermiquement par le rayonnement micro-ondes et, si nécessaire, par d'autres énergies complémentaires (infrarouge, air chaud, ...). Un placement du guide d'ondes (23) et son angle d'entrée dans l'enceinte (1) doit alors être tels que les ondes visent préférentiellement le lit de matériau à traiter (P) pendant la rotation de la cuve (7). Le matériau à traiter est alors brassé de façon homogène et porté à une température de consigne précise. Le produit est monté à la température désirée par les effets combinés des micro-ondes, ainsi que de la conduction, de la convection et du rayonnement issus de l'interaction des granulés entre eux produite par le brassage.
- La troisième position (figure 3c), dénommée ^{«} position de vidange", permet au produit traité (Pe) de s'évacuer de la cuve (7) par l'orifice (4b) prévu dans la partie haute de l'enceinte (1). L'angle correspondant à cette position peut être compris entre 40° et 180°, par rapport à la verticale (V), suivant le matériau traité (P). La cuve (7) pourra, de préférence, être maintenue en rotation pendant la vidange de façon à faciliter cette opération.

Les figures 4 et 5 sont des vues à caractère schématique représentant un exemple de réalisation du dispositif de traitement thermique selon l'invention selon lequel le(s) ensemble(s) générateur(s) de micro-ondes (20) et l'enceinte(1) sont rendus solidaires dans l'opération de rotation. Dans ce mode de réalisation, le ou les générateurs de micro-ondes (20) et l'enceinte (1) peuvent pivoter simultanément autour d'axes (31, 31b) ayant la même direction. Suivant un autre mode de réalisation, l'enceinte (1) et le ou les générateurs micro-ondes pivotent autour d'un même axe.

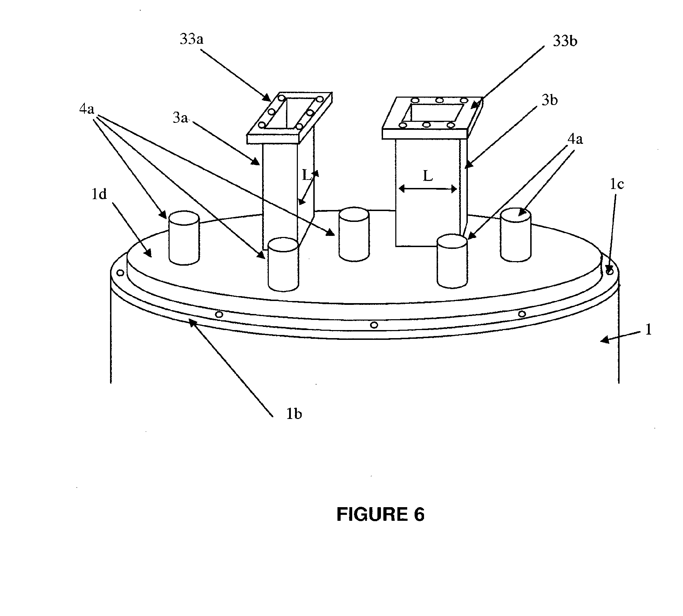

Dans un mode de réalisation de l'invention et comme représenté sur les figures 4 et 5, l'enceinte (1) peut recevoir un ou plusieurs guides d'entrée (3) permettant l'entrée du rayonnement micro-ondes à l'intérieur de l'enceinte (1). Dans le cas d'un montage avec deux générateurs (20), les guides d'entrée (3) doivent être conçues de façon non symétrique et avec les largeurs (L) des brides perpendiculaires entre elles, comme illustré figure 6, pour obtenir un couplage efficace des deux champs micro-ondes. Un raisonnement analogue peut être appliqué dans le cas d'un nombre supérieur de générateurs (20) micro-ondes. Dans certains modes de réalisation, le(s) générateur(s) (20) peuvent être fixés sur un support (50b) laissant libre leur rotation autour d'un axe (31b) disposé suivant la même direction que l'axe (31) de rotation de l'enceinte (1). Ainsi le raccordement rigides des générateurs à la cavité, par exemple par les guides d'ondes (21) et les brides (33), permet un entrainement en rotation des générateurs (20) lorsque l'enceinte (1) est pivotée jusqu'à sa position de vidange. Ceci évite avantageusement l'utilisation d'un système de bridage automatique (32) permettant le verrouillage/déverrouillage automatique des brides (33).

Selon un mode de réalisation, deux générateurs micro-ondes peuvent être couplés sur une même enceinte (1). Comme illustré figure 6, les guides d'ondes associés à ces générateurs (20) peuvent venir se fixer à l'aide de brides sur des brides (33a, 33b) de deux guides d'entrée (3a, 3b) du couvercle (1b). Comme mentionné plus haut, ces guides d'entrée (3a, 3b) sont conçues de façon non symétrique et avec les largeurs (L) des brides perpendiculaires entre elles pour obtenir un couplage efficace des deux champs micro-ondes. Leur entraxe est également suffisant pour éviter la création d'arcs, par exemple et de façon nullement limitative, supérieur à 150 mm. Le couvercle peut posséder des entrées (4a) constituées, par exemple de tubes dont le diamètre, par exemple compris entre 20 mm et 300 mm et la longueur, comprise par exemple entre 50 mm et 300 mm, sont déterminés en fonction de la fréquence micro-ondes utilisée pour empêcher les fuites micro-ondes. Le couvercle (1b) peut, par exemple, être fixé sur l'enceinte (1) à l'aide de vis (1c).

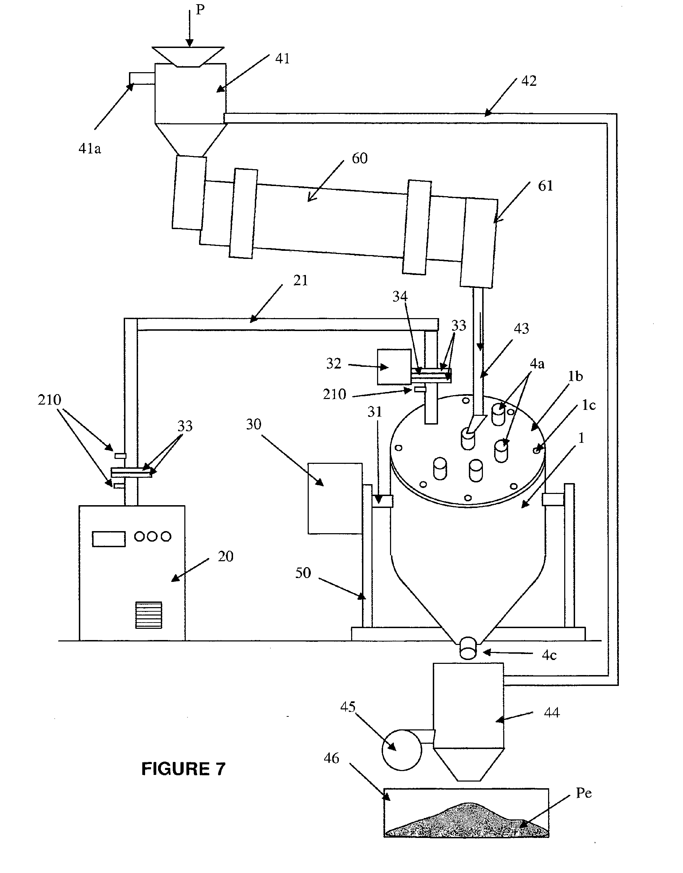

Dans un mode de réalisation et comme par exemple illustré figure 7, une innovation réside en l'utilisation d'un moyen de chauffe traditionnel (60), non micro-ondes, par exemple un four rotatif, pour préchauffer le matériau à traiter (P) de façon économiquement avantageuse, et de n'utiliser la chauffe micro-ondes uniquement pour la phase finale et technique du traitement thermique. Dans ce mode de réalisation, le produit à traiter (P) est introduit préférentiellement dans un réchauffeur (41) utilisant, par exemple, l'air chaud issu du refroidissement du matériau traité (Pe) en sortie de l'enceinte (1). Cet air peut être amené par une conduite (42), par exemple, au niveau inférieur du réchauffeur pour obtenir un mélange à contre courant avec le produit à traiter (P). Cet air valorisé peut ensuite être évacué par une cheminée (41a). Le matériau à traiter (P) est alors introduit, par exemple, en continu dans un four (60) permettant un préchauffage du produit jusqu'à une température, par exemple, inférieure de 100°C à 300°C de la température cible pour effectuer le traitement thermique. Dans certains modes de réalisation, cette température de préchauffage peut se situer juste en dessous du point critique auxquelles ont lieu les transformations chimiques ou physiques recherchées du matériau à traiter (P), comme par exemple, un changement d'état, une expansion ou toutes autres transformations. Le matériau à traiter (P) préchauffé est alors stocké dans une cuve tampon (61) calorifugée pour éviter les pertes thermiques. Le matériau à traiter (P) peut ensuite être envoyé par lots (^{«} batchs ^{»}) ou en continu dans l'enceinte (1) au moyen, par exemple, d'une amenée (43) afin de subir la phase final du traitement thermique par exposition à un champ micro-ondes provenant d'au moins un générateur (20) et transmis par des systèmes de guide(s) d'onde(s) (21) et de bride(s) (33). Un contrôle du traitement thermique peut être réalisé, par exemple, par les ouvertures (4a). Ce contrôle peut, par exemple, consister à suivre la température du matériau à l'aide d'un pyromètre ou tout autre moyen de mesure de la température, afin d'optimiser l'instant de vidange, par exemple, par basculement ou pivotement de l'enceinte (1). Le matériau traité (Pe) peut alors être évacué, par exemple, par l'orifice (4b) dans un refroidisseur (44). Un ventilateur (45) peut forcer l'air à circuler à contre courant pour échanger au mieux la chaleur du produit traité (Pe). L'air chaud ainsi obtenu peut être envoyé par une conduite (42) jusqu'au réchauffeur (41). Le matériau traité (Pe) refroidi peut ensuite être stocké dans un silo (46).

Un avantage majeur de ce mode de réalisation du dispositif selon l'invention est d'accroitre fortement la capacité de production. En effet la technologie micro-ondes est limitée en puissance par les générateurs industriels disponibles dans le commerce, soit environ à ce jour 100kW pour une fréquence d'environ 915 MHz. Même si l'utilisation possible de deux générateurs sur une cavité double cette puissance, les capacités de production industrielles s'en trouvent limitées. La solution proposée permet d'augmenter fortement la capacité de production et de rendre possible des applications industrielles de grande capacité.

Un autre avantage de ce mode de réalisation du dispositif selon l'invention est d'optimiser le prix de revient en réservant le procédé micro-ondes ^{«} haut de gamme ^{»} pour la phase technique de la transformation ne pouvant se faire que par ce procédé. Toute la phase de chauffage amont est réalisée, lorsque cela est possible, par un procédé conventionnel à plus faible coût.

L'originalité de l'invention consiste en l'emploi éventuel de plusieurs solutions technologiques innovantes qui combinées entre elles parviennent à améliorer fortement le rendement du dispositif :
- Utilisation d'une cuve intérieure en métal, par exemple, inoxydable. D'après l'état de l'art, ce matériau, réfléchissant les micro-ondes, est, à priori, incompatible avec une utilisation dans un champ micro-ondes du fait de la possibilité de création d'arcs et de boucles d'induction induites par la composante électrique du champ (courant de Foucault) pouvant amener une chauffe non recherchée et un emballement du métal. Ce risque est d'autant plus élevé que la température d'utilisation et la densité du champ sont importantes. Les études et essais menés par nos soins ont permis de déterminer le comportement à haute température et à de fortes densités de champ des aciers inoxydables et ont démontré que l'utilisation d'une nuance réfractaire à faible résistivité de cet acier permettait son utilisation pour des applications jusqu'à plus de 1500°C, voire 2000°C. Le matériau étant en mouvement dans la cuve, les contacts entre le matériau et le métal sont donc ponctuels et très brefs et la température du métal est inférieure à celle du matériau à coeur, les micro-ondes chauffant directement et uniquement le produit granulaire à traiter.
- Système d'optimisation du brassage en fonction du matériau traité (granulométrie, géométrie, fluidité, collage...). Cette optimisation est effectuée par le réglage du couple formé par la vitesse de rotation de la cuve et de l'angle de son inclinaison. L'optimisation a lieu pour un couple précis en fonction du matériau,
- Système d'optimisation du rendement de chauffe micro-ondes par l'ajustement de l'impédance de la cuve. Cet ajustement peut-être réalisé par l'insertion d'un système de cales entre le corps de vidange et le fond de la cuve fixe, ou par tout autre dispositif permettant un déplacement relatif entre l'émetteur et la cuve, qui entraine une modification des conditions de propagation du champ micro-ondes dans la cavité,

- Isolation thermique du couvercle avec une optimisation des pertes par rayonnement issues du matériau traité et système de fixation spécifique de cet isolant,
- Vidange gravitaire par basculement permettant une vidange rapide et l'utilisation d'une cuve interne monobloc. Ce système de vidange d'une enceinte micro-ondes est rendu possible par l'association de plusieurs solutions techniques : rotation, de préférence motorisée, de l'enceinte autour d'un axe passant, par exemple, par son centre de gravité, goulotte spécifique d'évacuation interne et cône de vidange,
- Isolation thermique de la cavité tournante avec optimisation de l'inertie thermique appliquée au volume métallique et utilisation d'un isolant thermique transparent aux micro-ondes et/ou à très faible inertie,
- Isolation thermique de l'enceinte,
- Système de bridage automatique et rapide du/des guide(s) d'ondes,
- Système de dépoussiérage des guides d'ondes, par exemple, avec fenêtre quartz et maintien d'une surpression d'air,
- Adaptation possible d'au moins deux arrivées de micro-ondes issues d'au moins deux générateurs différents sur la même cavité,
- Systèmes d'étanchéité au rayonnement micro-ondes entre l'enceinte et le couvercle et entre l'enceinte et l'arbre tournant permettant une maintenance aisée,
- Système de suivi et de régulation précis du traitement par lecture directe de la température du matériau,
- Chauffe du produit en deux étapes : préchauffage par un moyen conventionnel et finalisation du traitement par chauffe micro-ondes,

Les avantages de cette invention sont multiples :
- Efficacité : la chauffe est effectuée avec un rendement optimal et l'énergie micro-ondes est utilisée au mieux dans la chauffe du matériau avec des pertes minimisées. Des énergies complémentaires peuvent, si nécessaire, être apportées (air chaud, infrarouge...). Les températures de chauffe peuvent être comprises par exemple entre 200 °C et 1800 °C.
- Homogénéité de chauffe : le brassage maîtrisé du produit permet d'assurer une parfaite homogénéité de chauffe, au degré prés,
- Une régulation précise de la température et du temps de chauffe : des moyens de mesure par lecture directe de la température du matériau (pyromètre) permettent une régulation précise de la puissance délivrée de façon à maîtriser la courbe de chauffe. C'est la réponse du matériau aux micro-ondes qui entraine sa chauffe, ce qui diffère fondamentalement des autres procédés de chauffe où l'on impose une consigne de température au matériau. Cette particularité permet de se rapprocher des courbes ATD/ATG (respectivement Analyse ThermoDifférentielle et Analyse Thermo-Gravimétrique) du matériau et de constater les phases endothermiques et exothermiques des réactions.
- Une possibilité de traitement en continu des produits, par débordement pour des traitements entrainant une diminution de la densité du matériau,
- Un traitement thermique efficace de matériaux de faible granulométrie,
- Une qualité de produit exceptionnelle du fait de la précision du traitement et de la particularité de chauffe de l'intérieur vers l'extérieur,

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de traitement thermique, en particulier de matériaux divisés, comprenant une enceinte (1) étanche au rayonnement micro-ondes, au moins à la fréquence de traitement, communiquant au moins avec un générateur de micro-ondes (20), l'enceinte étanche comportant une ouverture de remplissage (4a) par la partie située au-dessus de l'axe (31) des moyens de pivotement, le dispositif étant **caractérisé en ce que** l'enceinte est munie de moyens de pivotement permettant de modifier l'inclinaison de cette dernière par rapport à la verticale (V), le dispositif comprenant en outre une cuve. (7) métallique ouverte vers l'ouverture de remplissage (4a) pour contenir la totalité du matériau à traiter dans le cycle et vers le générateur de micro-ondes (20), la cuve (7) étant tournante et entrainée en rotation par des moyens permettant de faire varier sa vitesse de façon à optimiser le brassage du produit (P) à traiter par des nervures radiales (2b) solidaires de la cuve, la cuve (7) étant placée dans l'enceinte (1) étanche au rayonnement micro-ondes et comprenant en outre des moyens de vidange (4b) du matériau traité situés dans la partie haute et utilisés après basculement de l'ensemble enceinte (1) et cuve (7).

2. Dispositif de traitement thermique selon la revendication 1, **caractérisé en ce que** l'impédance de la cuve (7) est ajustable par des moyens de réglage (8f) en hauteur de la cuve (7).

3. Dispositif de traitement thermique selon la revendication 1, **caractérisé en ce que** l'acier constitutif de la cuve intérieure tournante (7) est de faible résistivité.

4. Dispositif de traitement thermique selon la revendication 1, **caractérisé en ce que** l'acier constitutif de la cuve intérieure tournante (7) est réfractaire.

5. Dispositif de traitement thermique selon la revendication 1, **caractérisé en ce que** l'enceinte (1) comprend au moins une sortie (4b) apte à évacuer le matériau traité (Pe), par gravitation, suite au pivotement de cette dernière.

6. Dispositif de traitement thermique selon l'une des revendications 1 à 5 **caractérisé en ce qu'**un joint formé d'une tresse métallique est placé entre l'enceinte (1) et son couvercle (1b) de façon à éviter les fuites de rayonnement micro-ondes.

7. Dispositif de traitement thermique selon l'une des revendications 1 à 6 **caractérisé en ce qu'**un joint, formé d'une tresse métallique, est disposée entre l'enceinte (1) et l'arbre tournant (8) entrainant la cuve (7) de façon à éviter les fuites de rayonnement micro-ondes.

8. Dispositif de traitement thermique selon l'une des revendications 1 à 7 **caractérisé en ce que** le couvercle (1 b) comporte un système de goulotte métallique (16a), sur sa face en regard de la cuve tournante (7), permettant la vidange du matériau traité (Pe).

9. Dispositif de traitement thermique selon l'une des revendications 1 à 8 **caractérisé en ce que** l'enceinte (1), son couvercle (1b) et la cuve tournante (7) sont isolés thermiquement à l'aide de matériaux isolants à faible inertie thermique et transparents aux rayonnements micro-ondes, par exemple en fibres alumino-silicates.

10. Dispositif de traitement thermique selon la revendication précédente **caractérisé en ce que** le matériau isolant du couvercle (1b) est fixé sur ce dernier par l'intermédiaire d'un système de fixation compatible avec le rayonnement micro-ondes.

11. Dispositif de traitement thermique selon une des revendications 1 à 10 **caractérisé en ce que** le ou les ensemble(s) générateur(s) de micro-ondes (20) et guide(s) d'onde (21) sont montés solidaires de l'enceinte (1) de façon à pouvoir pivoter avec cette dernière.

12. Dispositif de traitement thermique selon une des revendications 1 à 10 **caractérisé en ce qu'**un système de bridage automatique permet le déverrouillage et le verrouillage du/des guide(s) d'ondes (21) de façon à désolidariser et réassembler ces derniers à l'enceinte (1) lors du pivotement de cette dernière.

13. Dispositif de traitement thermique selon une des revendications 1 à 12 **caractérisé en ce que** au moins une fenêtre en quartz (34) soit disposées au niveau de chaque bride (33) de guides d'ondes pour éviter les remontées de poussières vers le(s) générateur(s) (20).

14. Dispositif de traitement thermique selon la revendication précédente, **caractérisé en ce qu'**au moins un système d'injection d'air (40) soit disposé sur les guides d'ondes (21) pour créer des surpressions à l'intérieur de ces derniers et éviter la propagation de poussières.

15. Dispositif de traitement thermique selon une des revendications 1 à 14 **caractérisé en ce qu'**il comporte des moyens conventionnels de chauffe non micro-ondes de façon à préchauffer le matériau à traiter (P).

16. Dispositif de traitement thermique selon une des revendications 1 à 15, **caractérisé en ce qu'**il comporte, à l'extérieur de l'enceinte (1), des moyens de récupération (44, 45) de la chaleur émise par le matériau traité, cette chaleur étant transmise à un réchauffeur, après la sortie de l'enceinte (1) du matériau traité, pour chauffer, au moins en partie, ce réchauffeur (41) et préchauffer le matériau à traiter (P) avant son introduction dans l'enceinte (1).

17. Dispositif de traitement thermique selon une des revendications 1 à 16 **caractérisé en ce qu'**il comporte des moyens de mesure de la température du matériau à traiter (P) de façon à suivre et réguler le traitement thermique.

18. Dispositif de traitement thermique selon une des revendications 1 à 17, **caractérisé en ce qu'**une sortie (4c) est disposée sur la partie inférieure de l'enceinte (1) de façon à permettre l'évacuation des poussières, résidus, particules éjectées de la cavité ou les condensats des eaux de vaporisation.

## Patentansprüche

1. Wärmebehandlungsvorrichtung, insbesondere für feinteilige Stoffe, bestehend aus einem für Mikrowellenstrahlung undurchlässigem Behältnis (1), zumindest auf der Behandlungsfrequenz, in Verbindung mit mindestens einem Mikrowellengenerator (20), das undurchlässige Behältnis hat eine Einfüllöffnung (4a) oberhalb der Drehachse (31) bestehend, die Vorrichtung **dadurch gekennzeichnet ist, dass** das Behältnis mit Drehmitteln versehen ist zum Ändern dem Winkel des letzteren mit Bezug auf die vertikale (V), wobei die Vorrichtung ferner mit einer offenen metallischen Tank (7) in Richtung der Einfüllöffnung (4a), um das gesamte Material des Produktionszyklus zu enthalten, und in Richtung dem Mikrowellengenerator (20), der Tank (7) drehbar ist, und in der Umdrehung durch Mittel fortgezogen, die erlauben, ihre Geschwindigkeit verschiedenartig gestalten zu lassen, um das Brauen der behandlungspflichtigen Erzeugnisse (P) zu optimieren, um durch radiale Schaufeln (2b), im Tank festgelegt, der Tank (7) im Mikrowellenstrahlung undurchlässig Behältnis (1) behandelt ist, und ferner Entleerungsmittel (4b) der behandlungspflichtigen Erzeugnisse in dem oberen Teil befindet und nach der Drehung der zusammen Behältnis (1) und Tank (7).

2. Wärmebehandlungsvorrichtung nach Anspruch 1, ist **dadurch gekennzeichnet, dass** die Impedanz des Tanks (7) durch Stellmittel (8f) in der Höhe des Tanks (7) einstellbar ist.

3. Wärmebehandlungsvorrichtung nach Anspruch 1, ist **dadurch gekennzeichnet, dass** der Stahl des rotierenden inneren Tanks (7) einen niedrigen spezifischen Widerstand aufweist.

4. Wärmebehandlungsvorrichtung nach Anspruch 1, ist **dadurch gekennzeichnet, dass** der Stahl der rotierenden inneren Trommel (7) hitzebeständiger ist.

5. Wärmebehandlungsvorrichtung nach Anspruch 1, ist **dadurch gekennzeichnet, dass** das Behältnis (1) zumindest einen Auslass aufweist (4b), die zur Entleerung der behandelten Erzeugnisse (Pe) durch die Schwerkraft dient nach dem Verschwenken des letzteren.

6. Wärmebehandlungsvorrichtung nach einem der Ansprüche 1 bis 5, ist **dadurch gekennzeichnet, dass** eine Dichtung aus einem metallischen Geflecht, zwischen dem Behältnis (1) und dem Deckel positioniert (1 b) ist, um so ein Austreten von Mikrowellenstrahlung zu verhindern.

7. Wärmebehandlungsvorrichtung nach einem der Ansprüche 1 bis 6, ist **dadurch gekennzeichnet, dass** eine Dichtung aus einem metallischen Geflecht sich zwischen dem Behältnis (1) und der in den Tank führenden (7) Drehwelle (8) befindet, um so ein Austreten von Mikrowellenstrahlung zu verhindern.

8. Wärmebehandlungsvorrichtung nach einem der Ansprüche 1 bis 7, ist **dadurch gekennzeichnet, dass** der Deckel (1b) ein Metall-Kanalsystem (16a) seitlich gegenüber des Drehtanks (7) aufweist zum Ablassen der behandelten Erzeugnisse (Pe).

9. Wärmebehandlungsvorrichtung nach einem der Ansprüche 1 bis 8, ist **dadurch gekennzeichnet, dass** das Behältnis (1), der Deckel (1 b) und der Drehtank (7) thermisch durch mikrozwellendurchlaessige Materialien mit geringer Wärmeträgheit, wie beispielsweise Aluminiumsilikatfasern, isoliert sind.

10. Wärmebehandlungsvorrichtung nach dem vorhergehenden Anspruch, ist **dadurch gekennzeichnet, dass** das isolierende Material des Deckels (1b) an diesem mittels eines Befestigungssystems, das mit der Mikrowellenstrahlung kompatibel ist, angebracht ist.

11. Wärmebehandlungsvorrichtung nach einem der Ansprüche 1 bis 10, ist **dadurch gekennzeichnet, dass** die Gesamtheit der beiden Mikrowellengenerator(en) und (20) und Hohlleiter (21) mit dem Behältnis (1) drehbar montiert sind.

12. Wärmebehandlungsvorrichtung nach einem der Ansprüche 1 bis 10, ist **dadurch gekennzeichnet, dass** ein Spannsystem es erlaubt das automatische Entriegeln und Verriegeln der Hohlleiter (21), um diese vom Behältnis (1) während des Drehens zu trennen.

13. Wärmebehandlungsvorrichtung nach einem der Ansprüche 1 bis 12 ist **dadurch gekennzeichnet ist, dass** mindestens ein Quarzfenster (34) an jedem Flansch (33) der Hohlleiter angeordnet ist, um Staubablagerung auf dem (n) Generator (en) (20) zu verhindern.

14. Wärmebehandlungsvorrichtung nach dem vorhergehenden Anspruch, ist **dadurch gekennzeichnet, dass** mindestens ein Luftzufuhrsystem (40) an den Hohlleiter (21) angeordnet ist, um einen Überdrück in den letzteren zu schaffen, um die Ausbreitung von Staub zu verhindern.

15. Wärmebehandlungsvorrichtung nach einem der Ansprüche 1 bis 14, ist **dadurch gekennzeichnet, dass** sie mit herkömmlichen Heizelementen ausgestattet ist, um die Erzeugnisse zu behandelnden (P) vorzuwärmen.

16. Wärmebehandlungsvorrichtung nach einem der Ansprüche 1 bis 15, ist **dadurch gekennzeichnet, dass** außerhalb des Behältnisses (1), sich eine Vorrichtung befindet (44, 45), welche die von dem behandelten Erzeugnis emittierte Wärme an ein Heizelement weiterleitet, welches das behandelte Erzeugnis nach dem Auslass aus dem Behältnis (1) zu erwärmen oder neues Material (P) vor seiner Einführung in das Behältnis (1) :vorzuwärmen.

17. Wärmebehandlungsvorrichtung nach einem der Ansprüche 1 bis 16, ist **dadurch gekennzeichnet, dass** sie Vorrichtungen zum Messen der Temperatur des behandelten Erzeugnisses (P) besitzt, welche ein Überwachen und Regulieren der Hitzebehandlung erlaubt.

18. Wärmebehandlungsvorrichtung nach einem der Ansprüche 1 bis 17, ist **dadurch gekennzeichnet, dass** ein Auslass (4c) sich an dem unteren Teil des Behältnisses (1) befindet, welcher die Evakuierung von Staub, vom Behältnis stammender Teilchen und kondensiertem Wasserdampfes erlaubt.

## Claims

1. Heat treatment device, particularly to divided materials, comprising of a chamber (1) impervious to microwave radiation, at least to treatment frequency, linked at least to one microwave generator (20), the chamber has a fitting inlet (4a) on the part above the rotation axle (31), the device is **characterized in that** the chamber is provided with rotating system permitting its tilt from the vertical axis (V), the device comprise moreover of a metal tank (7) opened towards the filling inlet (4a) to contain all the material to be treated and towards the microwave generator (20), the tank (7) being rotated by speed controllers to optimise the mixing of the product (P) to be treated by radial blades (2b) fixed on the tank, the tank (7) is placed into the chamber (1) impervious to microwave radiation and comprising of dumping facilities (4b) of the treated material situated in the upper part and used after the chamber (1) and tank (7) changeover.

2. The device according to claim 1 further is **characterized in that** the tank (7) impedance is adjustable by the setting (8f) of the tank height (7).

3. The device according to clairh 1 further is **characterized in that** the rotating inner tank (7) is made with low resistivity steel.

4. The device according to claim 1 further is **characterized in that** the rotating inner tank (7) is made with high-temperature steel.

5. The device according to claim 1 further is **characterized in that** the chamber (1) has at least one outlet (4b) appropriate to evacuate the treated material (Pe), by gravitation, after its changeover.

6. The device according to one of claim 1 to 5 further is **characterized in that** a metal braid is placed between the chamber (1) and its lid (1b) to avoid microwaves radiation leak.

7. The device according to one of claim 1 to 6 further is **characterized in that** a metal braid is placed between the chamber (1) and the rotating shaft (8) running the tank (7) to avoid microwave radiation leaks.

8. The device according to one of claim 1 to 7 further is **characterized in that** the lid (1 b) has a metal chute system (16a), on its face towards the rotating tank (7), permitting the dumping of the treated material (Pe).

9. The device according to one of claim 1 to 8 further is **characterized in that** the chamber (1), its lid (1b) and the rotating tank (7) are insulated with insulating materials with low thermal inertia and transparent to microwave radiation, for example alumino-silicate materials.

10. The device according to the previous claim is **characterized in that** the fixing system of the insulating material on the lid (1b) is compatible with microwaves radiation.

11. The device according to one of claim 1 to 10 further is **characterized in that** the (or all of the) microwaves generator(s) (20) and waveguide(s) (21) are fixed to the chamber (1) to permit the whole assembly rotation.

12. The device according to one of claim 1 to 0 further is **characterized in that** an automatic clamping system allows the locking and unblocking of the waveguide(s) to dissociate them from the chamber (1) when the chamber is rotated.

13. The device according to one of claim 1 to 12 further is **characterized in that** at least one quartz window (34) is placed on each coupling waveguides (33) to avoid the mounting of dust towards the generator(s) (20).

14. The device according to the previous claim is **characterized in that** there is at least one air injection system (40) placed on the waveguides (21) to create overpressure inside, the waveguides and avoid dust propagation.

15. The device according to one of claim 1 to 14 further is **characterized in that** it has one (or several) other conventional heating system(s) to pre-heat the Material to be treated (P).

16. The device according to one of claim 1 to 15 further is **characterized in that** it has outside the chamber (1), device to collect the heat (44, 45) given out by the treated material. This heat is transmitted to a re-heater after the treated material exits the chamber (1), to heat or at least participate to heat the re-heater (41) to preheat the new batch of material to be treated (P) before bering introduced into the chamber (1).

17. The device according to one of claim 1 to 16 further is **characterized in that** it has a temperature measurement system to follow the material temperature and to be able control the heat treatment.

18. Heat treatment device according to one of claim 1 to 17 further, **characterized in that** an outlet (4c) is placed on the lower surface of the chamber (1) to permit the evacuation of dust, residues, particles ejected from the tank or condensate from vaporized water.
